# EUROPÄISCHE PATENTSCHRIFT

(11) **EP 2 326 518 B1**
(45) Veröffentlichungstag und Bekanntmachung des Hinweises auf die Patenterteilung: **25.06.2014**
(21) Anmeldenummer: 09744321.2
(22) Anmeldetag: 21.09.2009
(51) Int. Cl.: B60B 17/00

(54) **RAD, INSBESONDERE SCHIENENRAD FÜR SCHIENENFAHRZEUGE**
WHEEL, PARTICULARLY RAIL WHEEL FOR RAIL VEHICLES
ROUE, EN PARTICULIER ROUE POUR VEHICULES SUR RAIL

(30) Priorität: 22.09.2008 DE 202008012661 U
(43) Veröffentlichungstag der Anmeldung: 01.06.2011
(73) Patentinhaber: Faiveley Transport Witten Gmbh, 58454 Witten (DE); Gutehoffnungshütte Radsatz GmbH, 46145 Oberhausen (DE); Technische Universität Dresden, 01062 Dresden (DE)
(72) Erfinder: MEHLAN, Andreas, 59425 Unna (DE); RUPPERT, Helmut, F, 42857 Remscheid (DE); GERLACH, Thomas, 47506 Neukirchen-Vluyn (DE); KEMP-LETTKAMP, Christian, 46487 Wesel (DE); STÜWING, Dieter, 01824 Rosenthal (DE)
(74) Vertreter: Richter Werdermann Gerbaulet Hofmann
(86) Internationale Anmeldenummer: PCT/EP2009/006798
(87) Internationale Veröffentlichungsnummer: WO 2010/031582

(56) Entgegenhaltungen:
- EP-A- 0 108 394
- DE-A1- 4 343 711
- FR-A- 1 025 375
- FR-A- 2 717 122
- GB-A- 424 701
- GB-A- 634 744
- GB-A- 640 553

## Beschreibung

### Technisches Gebiet

Die Erfindung betrifft ein Rad, insbesondere ein Schienenrad für Schienenfahrzeuge, mit einem ein- oder mehrteiligen Radkörper, der eine Radnabe und einen Radkranz oder -reifen umfasst, und mit wenigstens einem dreidimensionalen Verbindungselement oder Verbindungselementen zwischen Radnabe und Radreifen, die eine steife Hohlkammerkonstruktion beschreiben. Weiterhin betrifft die Erfindung die Ausführung mindestens eines Verbindungselements als Radbremsscheibe.

### Stand der Technik

Ein Schwerpunkt der heutigen Forschung und Entwicklung im Bereich des Schienenverkehrs liegt auf der Senkung der Geräuschemission. Eine wesentliche Lärmquelle am Schienenfahrzeug ist das Rad, das durch die Abrollbewegung auf der Schiene zu Schwingungen angeregt wird. Die Schwingungen werden von der angrenzenden Luft als Schall aufgenommen und führen zu unerwünschter Lärmemission.

Gesucht werden technische Lösungen, die effizient die Geräuschemission senken und gleichzeitig die betrieblichen und wirtschaftlichen Aspekte des Bahnbetriebs berücksichtigen. Besonders wirkungsvoll sind Maßnahmen, die direkt das Schwingungsverhalten des Rades beeinflussen und somit die Entstehung von Luftschall verhindern. Eine Möglichkeit zur Beeinflussung des Schwingverhaltens von Schienenfahrzeugrädern ist die Gestaltung von Rad und Anbauteilen, wobei diese bei entsprechender Gestaltung als versteifend wirkende Verbindungselemente zur Schallpegelreduzierung beitragen. Insbesondere bei Rädern mit Radbremsscheiben bietet sich die Möglichkeit an, die Radbremsscheiben auch zur Beeinflussung des Schwingungsverhaltens, insbesondere durch Erhöhung der Radsteifigkeit, zu nutzen.

Die europäische Patentschrift EP 0861157 B1 beschreibt ein solches strukturoptimiertes Schienenfahrzeugrad mit verringerter Schallabstrahlung. Dabei weist die Radscheibe eine besonders gewellte Form auf. Die Einbeziehung von Anbauteilen zur Lärmminderung ist allerdings nicht vorgesehen.

Aus der deutschen Patentschrift DE-PS 11087 ist ein Rad für Eisenbahnfahrwerke bekannt. Hierbei bildet ein Verbindungselement mit einer Radnabe eine Einheit, und zwei solche Einheiten in Verbindung stützen den Radkranz ab. Weder ist diese Ausführung für eine Bremsscheibe vorgesehen noch werden Maßnahmen zur Lärmminderung genannt.

Ein anderes Schienenrad wird in der FR 1025375 A vorgestellt. Zur Lärmminderung werden vibrationsabsorbierende Scheiben aus Dämpfungsmaterial zwischen Radkranz und Radnabe eingesetzt. Eine Scheibenbremse ist jedoch nicht vorgesehen und auch konstruktionsbedingt durch die Lärmdämpfungsscheiben nicht einsetzbar.

In der WO 93/13952 ist ein Rad für Schienenfahrzeuge gezeigt und beschrieben, das einen Einsatz von Wellenscheibenbremsen erlauben soll. Hierbei können Scheiben, die parallel zur Radscheibe angebracht werden, zur axialen Versteifung eingesetzt werden. Die Steifigkeit des Rades in axialer Richtung soll aufgrund der geometrischen Gestaltung mindestens 100 N/mm betragen. Die Anordnung der Scheibenbremse ist jedoch nicht näher beschrieben. Maßnahmen zur Lärmverminderung werden nicht genannt.

Aus der gattungsgemäßen DE 43 43 711 C2 ist ein Schienenrad in Leichtbauweise bekannt, bei dem ein den Radreifen verbindender Doppelsteg vorhanden ist. Dabei wird mindestens ein Steg in zylindrische Anlageflächen an Radnabe und Radsteg eingesetzt.

Es sind bereits Lösungen bekannt, bei denen ein Radkörper und Bremsscheiben so kombiniert werden, dass ein kräftiger und einfacher Aufbau erreicht wird. So wird nach der DE 2 341 008 A1 beschrieben, dass der Radkörper zwischen beiden Bremsflächen und zwischen innerem und äußerem Durchmesser schubspannungsfrei gestaltet ist, wobei eine Gummikörperanlage vorhanden ist. Die Einlage soll Wärmedehnungen ausgleichen. Eine Luftkühlung ist ebenfalls vorgesehen.

Die GB 639 744 A offenbart ein gummigefedertes Rad, insbesondere gummigefedertes Rad für Schienenfahrzeuge, bestehend aus einer Nabe und einem Radkranz mit zwei beabstandeten Platten zwischen denen Federelemente angeordnet sind und die äußeren Platten mittels Verschraubungen verbunden sind. Beschrieben wird ein Rad, das mittels eingebauter Gummielemente eine hohe Einfederung und Dämpfung ermöglichen soll.

### Darstellung der Erfindung: Aufgabe, Lösung, Vorteile

Der vorliegenden Erfindung liegt die Aufgabe zugrunde, ein Rad der genannten Art zu schaffen, welches eine verminderte Schallabstrahlung bewirkt. Dieses Ziel soll erreicht werden durch Versteifung des Rades derart, dass eine oder mehrere dominante Systemeigenfrequenzen des Rades oder des Radsatzes, der aus den beiden Rädern und der Radsatzwelle gebildet wird, außerhalb des aus dem Rad-Schiene-Kontakt resultierenden Erregerfrequenzbereichs verschoben werden.

Erfindungsgemäß wird die Aufgabe gelöst durch ein ein- oder mehrteiliges Rad mit einem oder mehreren Verbindungselementen zwischen Radnabe und Radreifen. Zwischen Radnabe und Radreifen kann sich ein Radsteg befinden. Die Verbindungselemente bilden zusammen mit dem Radkörper eine steife Hohlkammerkonstruktion. Die Versteifung wird insbesondere durch die Abstützung der Verbindungselemente gegen den Radsteg an zumindest einer weiteren Stelle zwischen Radnabe und Radreifen erreicht. In einer anderen Ausführung wird der Radsteg durch die Verbindungselemente ersetzt. In diesem Fall stützen sich die Verbindungselemente an zumindest einer Stelle zwischen Radnabe und Radreifen gegeneinander ab. Die Verbindungselemente können mit Radnabe, Radreifen, Radsteg oder untereinander stoff-, form- oder kraftschlüssig verbunden sein.

Erfindungsgemäß wird ein Rad, insbesondere ein Schienenrad für Schienenfahrzeuge, mit einem ein- oder mehrteiligen Radkörper vorgesehen, der eine Radnabe und einen Radkranz oder -reifen und einen Radsteg umfasst und mit wenigstens einem 3-dimensionalen Verbindungselement, wobei das Verbindungselement (8, 9) zusammen mit dem Radkörper (3) eine steife offene oder geschlossene Struktur bildet, wobei erfindungsgemäß vorgesehen ist, dass das Verbindungselement der stoffschlüssig mit Nabe und Radkranz oder -reifen verbundene Radsteg ist und dass mindestens ein parallel oder schräg und zum Radsteg beabstandetes scheibenförmiges Element zusätzlich kraft-, form- und/oder stoffschlüssig mit Radnabe und Radkranz oder -reifen verbunden ist, wobei sich das Scheibenelement zusätzlich zu den äußeren Verbindungen zum Radkranz oder -reifen und Radnabe an mindestens einer Stelle auf dem Steg kraft-, form- und/oder stoffschlüssig, insbesondere über mindestens ein zusätzliches Abstützelement, abstützt. Bei einer weiteren vorteilhaften Ausgestaltungform wird das Verbindungselement als Radbremsscheibe ausgeführt. Dabei ergibt sich ein Rad mit einer integrierten Bremsscheibe, das die Funktion des Rades mit der der Bremsscheibe verbindet, wobei sich insgesamt eine leise, leichte und wirtschaftliche Konstruktion ergibt.

Eine Grundidee ist dabei, dass die scheibenförmigen Elemente oder auch Bremsscheiben zusammen mit dem Radkörper eine steife Hohlkammerkonstruktion bilden, so dass die Systemeigenfrequenzen außerhalb der Erregerfrequenzen verschoben werden, um eine Lärmabstrahlung zu mindern.

Die Bremsscheibe kann nicht nur als bloße Zusatzmasse verwendet werden, um eine oder mehrere Eigenfrequenzen des Rades zu verschieben, sondern die Bremsscheibe als mittragendes Bauteil kann einen Teil der Masse der Basiskonstruktion ersetzen, so dass Eigenfrequenzen des aus Rad und Bremsscheibe(n) gebildeten Systems verschoben werden. Dadurch wird eine leichtere Konstruktion erreicht. Im Rahmen der Lärmminderung, vor allem bei Schienenfahrzeugen, kann die Bremsscheibe zur Dämpfung von Schwingungen des Radkörpers verwendet werden. Grundsätzlich möglich ist, dass zusätzlich die in der Verbindung zum Rad auftretenden Reibung zur Dämpfung beiträgt.

Besonders günstig ist es, wenn der Radkörper und/oder die versteifenden Verbindungselemente und/ oder die Bremsscheibe eine verrippte Struktur mit dünnen Stegen zur Versteifung und Gewichtsreduzierung aufweist, und zwar insbesondere dann, wenn die Rippen eine solche Dicke aufweisen, dass im Falle einer Bremsscheibe Wärme aus dem Bremsvorgang aufgenommen, gespeichert und abgeführt werden kann. Die erfindungsgemäße Konstruktion erlaubt die Verwendung besonders dünner verrippter Stege im Zusammenhang mit der als zylindrischem Körper ausgebildeten Radscheibe, wobei diese im Bereich der Funktion als Bremsscheibe vorzugsweise die nötige Dicke zur Aufnahme, Speicherung und Ableitung der Wärme aufweisen.

Von Vorteil ist es auch, dass ein erster, dem Radreifen naher Öffnungsspalt und ein zweiter, der Radnabe naher Öffnungsspalt vorhanden sind, wobei die Öffnungsspalte zur Abführung einer Wärmemenge durch Luftdurchströmung vorgesehen sind. Bei dieser Lösung, bei der zweckmäßigerweise das Rad als zylindrischer Körper mit besonders dünnen verrippten Radstegen ausgebildet ist und in vorteilhafter Weise am inneren und äußeren Rand der Radscheibe Öffnungen aufweist, können die Rippen bei Rotation von der Umgebungsluft umströmt werden. Dadurch wird ein erhöhter Kühleffekt zur Abführung der beim Bremsen in Wärme umgesetzten Energie erzeugt.

Eine leichte und dennoch steife Konstruktion wird dadurch erreicht, dass zwischen Radnabe und Radreifen sich erstreckende erste Rippen und zweite, kürzere Rippen vorhanden sind, wobei vorzugsweise die kürzeren Rippen an einem inneren Rand des Radreifens angeformt sind.

### Kurze Beschreibung der Zeichnungen:

Weitere vorteilhafte Ausgestaltungsmerkmale der Erfindung sind in den abhängigen Ansprüchen enthalten. Anhand von in der Zeichnung veranschaulichten, bevorzugten Ausführungs- und Anwendungsbeispielen soll die Erfindung genauer erläutert werden. Dabei zeigen in rein schematischer Darstellung:
- Fig. 1a,b,c: Schnittdarstellungen einer ersten Ausführungsform eines erfindungsgemäßen Schienenrades mit drei unterschiedlichen Verbindungselementen,
- Fig. 2: eine Schnittdarstellung einer zweiten Ausführungsform eines Schienenrades,
- Fig. 3a: eine Schnittdarstellung einer dritten Ausführungsform eines erfindungsgemäßen Schienenrades,
- Fig. 3b: in einer weiteren Ausführungsform eine Schnittdarstellung einer dritten Ausführungsform eines erfindungsgemäßen Schienenrades,
- Fig. 4: eine Schnittdarstellung einer vierten Ausführungsform eines erfindungsgemäßen Schienenrades,
- Fig. 5: eine Schnittdarstellung einer fünften Ausführungsform eines Schienenrades,
- Fig. 6: eine Schnittdarstellung einer sechsten Ausführungsform eines erfindungsgemäßen Schienenrades,
- Fig. 7: eine perspektivische Darstellung einer Radbremsscheibenkonstruktion,
- Fig. 8: eine weitere perspektivische Darstellung der Radbremsscheibenkonstruktion aus einem anderem Winkel,
- Fig. 9: eine Ansicht der Radbremsscheibenkonstruktion gemäß Fig. 7 bzw. Fig. 8 von der Seite,
- Fig. 10: eine Ansicht der Radbremsscheibenkonstruktion gemäß Fig. 7 von einer Stegseite aus gesehen,
- Fig. 11: eine Schnittdarstellung zur Fig. 9, und
- Fig. 12: eine Schnittdarstellung zur Fig. 10.

### Bester Weg zur Ausführung

In den Figuren sind gleiche Teile mit denselben Bezugszeichen versehen.

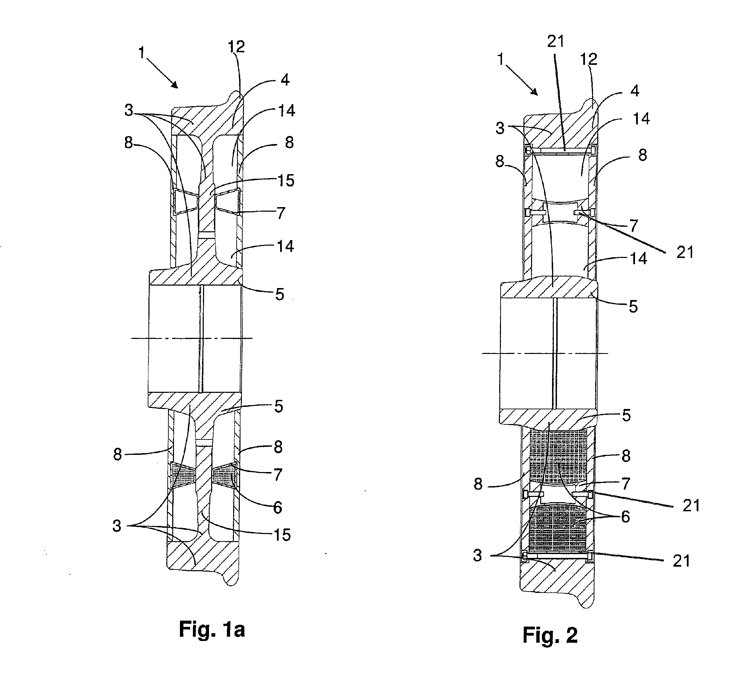

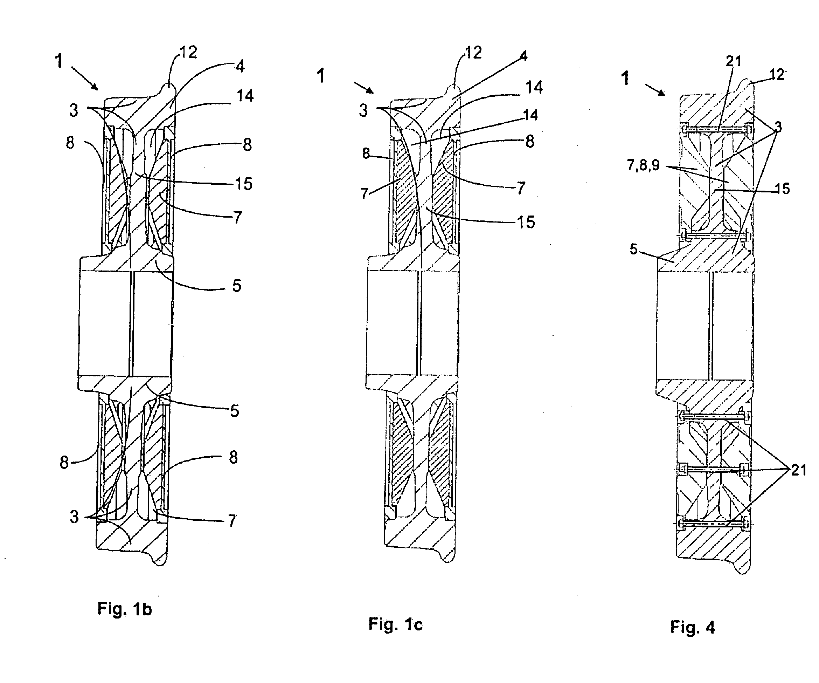

Fig.1a, b und c zeigen eine erste Ausführungsform eines erfindungsgemäßen Rades 1 für Schienenfahrzeuge. Dabei bildet ein Radkörper 3, bestehend aus Radkranz 4, Radsteg 15, Radnabe 5 und Spurkranz 12, zusammen mit zwei Scheibenelementen 8 eine Hohlkammerkonstruktion. Die Verbindung zwischen Radkörper 3 und Scheibenelement 8 kann dabei stoffschlüssig oder kraftschlüssig erreicht werden. Zusätzlich werden die Scheibenelemente 8 gegen den Radsteg 15 mittels Abstützelementen 7 verbunden, um die Steifigkeit der Konstruktion weiter zu erhöhen. Fig. 1a, 1 b und 1c zeigen dabei drei unterechiedliche Ausführungsformen des Scheibenelements 8 und des Abstützelements 7, wobei das Abstützelement 7 in Fig. 1a umlaufend ist und in Fig. 1c einzelne Rippen eingesetzt sind. In Fig. 1b ist das Abstützelement 7 zweiteilig ausgeführt mit eingesetzten Rippen 16 und einem umlaufenden oder geteilten Ring 16 an der Anlagefläche zum Radsteg 15. In der unteren Hälfte von Fig. 1a ist weiterhin zu sehen, wie einer der entstehenden Hohlräume im Abstützelement 7 mit einem dämpfenden Medium 6 gefüllt ist.

Fig.2 zeigt eine zweite Ausführung eines gattungsgemäßen Rades 1. Dabei besteht der Radkörper 3 aus einem Radreifen 4 und einer Radnabe 5. Der Radsteg 15 wird durch zwei Scheibenelemente 8 ersetzt. Die Scheibenelemente 8 werden durch eine Abstützung 7 gegeneinander verspannt, um die Steifigkeit weiter zu erhöhen. In der unteren Hälfte von Fig.2 ist eine Variante dargestellt, bei der zusätzlich zwei Hohlräume 14a mit einem dämpfenden Medium 6 gefüllt sind.

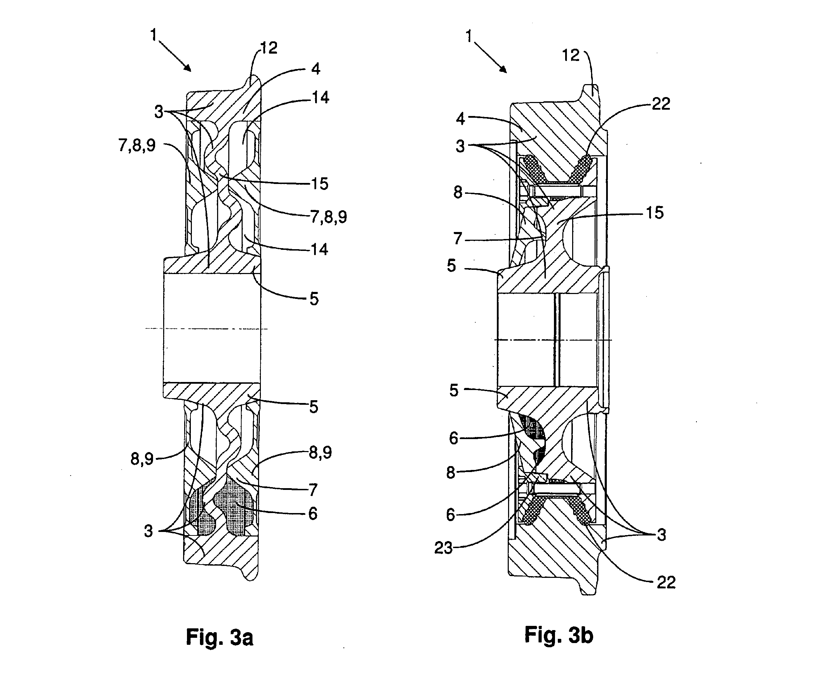

Fig.3a zeigt eine weitere Ausführung des erfindungsgemäßen Rades 1. Der Radkörper 3 bildet wieder mit den Scheibenelementen 8 eine steife Hohlkammerkonstruktion. Die Scheibenelemente 8 liegen an Radkranz 4 und Radnabe 5 an. Die Abstützelemente 7 sind hier einstückig mit den Scheibenelementen 8 verbunden, so dass sich die Verbindungselemente 8 zur zusätzlichen Versteifung direkt auf den Radsteg 15 abstützen. Eine weitere Ausgestaltungsform des erfindungsgemäßen Rades sieht die Verwendung des Scheibenelements 8 als Bremsscheibe 9 vor. Um Wärmedehnungen auszugleichen, ist es vorteilhaft, den Radsteg 15 gewellt auszuführen. In der unteren Hälfte von Fig. 3a wird eine weitere Variante gezeigt, bei der zwei der Hohlräume 14 mit einem dämpfenden Medium 6 gefüllt sind.

Erfindungsgemäß bilden die Verbindungselemente 8, 9, 15 zusammen mit dem Radkörper 3 eine steife Struktur, so dass die Frequenzen der akustisch relevanten Eigenformen außerhalb eines Erregerfrequenzbereichs verschoben werden, um die Schallabstrahlung zu mindern. Die Verschiebung der Eigenfrequenzen wird insbesondere durch eine durch die Verbindungselemente 8, 9, 15 veränderte Masse und Masseverteilung des Schienenrades 1 erreicht sowie durch die Veränderung der Radgeometrie im Sinne einer Versteifung.

Fig. 3b zeigt eine weitere Ausführung des erfindungsgemäßen Rades 1. Der Radkranz 4 ist mittels eines ein- oder mehrteiligen V-förmigen Elastomerelements 22 mit dem Radkörper 15 verbunden. Dieser bildet wieder mit dem Scheibenelement 8 eine steife Hohlkammerkonstruktion. Das Scheibenelement 8 liegt am Radkörper 3 und Radnabe 5 an und ist durch einen Spannring 23 mit dem Radkörper fest verbunden. Mittels des Abstützelements 7 stützt sich das Scheibenelement 8 zusätzlich am Radkörper 15 ab. Das Abstützelement 7 ist hier einstückig mit dem Scheibenelement 8 verbunden, so dass sich das Scheibenelement 8 zur zusätzlichen Versteifung direkt auf dem Radsteg 15 abstützt. Eine weitere Ausgestaltungsform des erfindungsgemäßen Rades sieht die Verwendung des Scheibenelements 8 als Bremsscheibe 9 vor. In der unteren Hälfte von Fig. 3b wird eine weitere Variante gezeigt, bei der zwei der Hohlräume 1a mit einem dämpfenden Medium 6 gefüllt sind.

Fig. 4 zeigt die Ausführung des erfindungsgemäßen Rades 1 in einer verschraubten Ausführung. Jedes Scheibenelement 8 ist hier einstückig mit dem Abstützelement 7 verbunden und kann insbesondere auch als Bremsscheibe 9 ausgeführt werden. Das Scheibenelement 8 wird an einem äußeren Umfang an den Radkranz 4 und an einem inneren Umfang an der Radnabe 5 angebracht und mittels Schraubenverbindungen 21 fest verbunden. In einem mittleren Umfang stützen sich die Scheibenelemente 8 entweder durch Vorspannung des Scheibenelements auf den Radsteg 15 ab, wie in Fig. 4 oben zu sehen ist, oder sie werden durch Schraubenverbindungen 21 in einem mittleren Umfang des Rades an den Radsteg 15 angebunden, wie in Fig. 4 unten zu sehen ist.

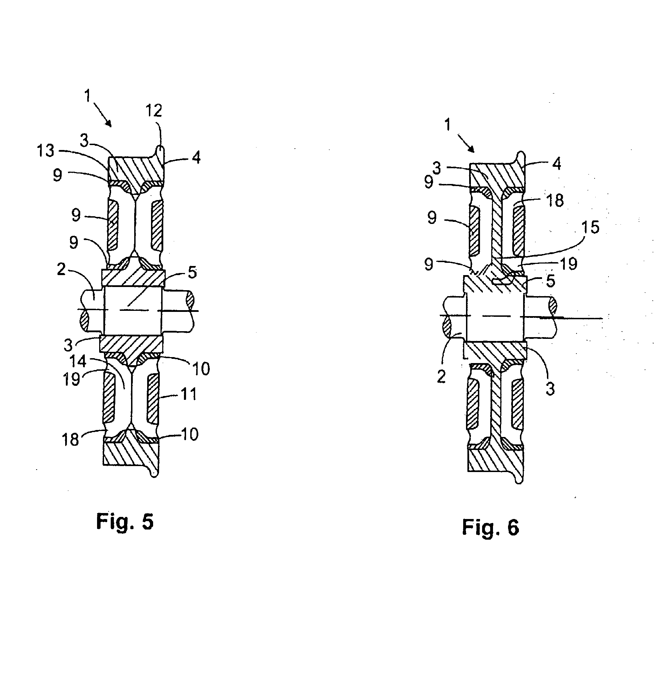

Fig. 5 zeigt eine weitere Ausführungsform eines gattungsgemäßen Schienenrades 1 für Schienenfahrzeuge, das an einer Welle 2 montierbar ist. Das Rad 1 umfasst einen ein- oder mehrteiligen Radkörper 3. Dieser ist mit einer Radnabe 5 und einem Radreifen 4 versehen. Der Radreifen 4 besteht im Wesentlichen aus einem Metaliwerkstoff. Bei der Variante gemäß Fig. 5 ist der Radkörper 3 mehrteilig ausgeführt. Weiterhin ist das Schienenrad 1 mit einer in dem Rad 1 integrierten Bremsscheibe 9 versehen. Die Bremsscheibe 9 besteht aus bekannten Bremselementen 10 und 11, die als Ringelemente aus geeigneten Materialien für Radbremsscheiben ausgeführt sind. Weiterhin zeigt die Fig. 5 einen Spurkranz 12 zur Führung an Schienen.

Hierbei bildet die Bremsscheibe 9 zusammen mit dem Radkörper 3 eine steife Struktur, so dass die Frequenzen der akustisch relevanten Eigenformen außerhalb eines Erregerfrequenzbereichs verschoben werden, um die Schallabstrahlung zu mindern.

Die Verschiebung der Eigenfrequenzen wird insbesondere durch eine durch die Bremsscheibe veränderte Masse und Masseverteilung des Schienenrades 1 sowie durch die Veränderung der Radgeometrie im Sinne einer Versteifung erreicht.

Wie weiterhin Fig. 5 veranschaulicht, ist die Bremsscheibe 9 zwischen der Radnabe 5 des Rades 1 und einem inneren Rand 13 des Radreifens 4 angeordnet bzw. dort eingebettet. Die Bremsscheibe 9 ist mit dem Radkörper 3 dadurch verbunden, dass die Bremsscheibe 9 zwischen der Radnabe 5 des Rades 1 und dem inneren Rand 13 des Radreifens 4 fest eingespannt ist. Alternativ kann die Bremsscheibe 9 form- oder stoffschlüssig verbunden sein.

Bei dieser in Fig. 5 gezeigten Variante wird die Bremsscheibe 9 direkt als Radsteg verwendet. Dies bedeutet, dass die Bremsscheibe 9 den Radsteg ersetzt, wodurch eine leichte und stabile Konstruktion möglich ist.

Der Radkörper 3 ist als Ring ausgeführt. Die Bremsscheibe 9 ist in dem Hohlraum zwischen dem Radkörper 3 und der Nabe 5 integriert.

In Fig. 6 ist eine andere Ausführungsform des erfindungsgemäßen Schienenrades 1 gezeigt. Bei dieser Lösung stützt sich die Bremsscheibe 9 zusätzlich in einer axialen Mitte der Radscheibe auf dieser ab. In der Mitte verläuft ein Radsteg 15, der sich von der Radnabe 5 bis zum Radreifen 4 erstreckt und beide Teile miteinander verbindet. Bei dieser Lösung ist der Radkörper 3 einteilig. Diese Ausführungsform unterscheidet sich von der ersten Ausführungsform dadurch, dass die Bremsscheibe 9 den Steg 15 nicht ersetzt.

Wie die Figuren 5 und 6 zeigen, sind bevorzugt ein Paar von Bremsscheiben 9 in dem Rad 1 integriert, die vorzugsweise praktisch "Rücken an Rücken" angeordnet sind. Lösungen mit nur einer Bremsscheibe 9 sind jedoch auch möglich.

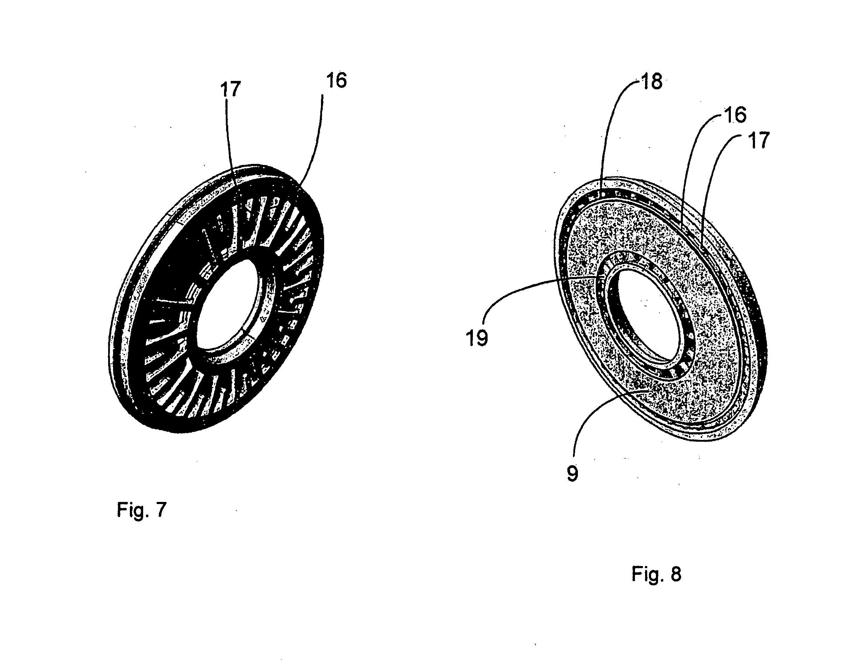

Wie die Figuren 7 bis 12 zeigen, insbesondere aber Fig. 7, weisen der Radkörper 3 und/oder die Bremsscheibe eine verrippte Struktur mit dünnen Radstegen 16, 17 auf. Diese sind geeignet um Wärme aufzunehmen, zu speichern und durch Konvektion an die Umgebungsluft abzugeben. Zusätzlich erhöhen die Stege 16, 17 die Steifigkeit der Radkonstruktion. Die Radstege 16, 17 sind so dick, dass eine ausreichende Masse vorhanden ist, um die beim Bremsvorgang entstehende Wärmeenergie zusammen mit den Bremsscheiben aufzunehmen und zu speichern. Eine geeignete Stegbreite und oder Stegtiefe liegt zwischen 1 und 10 cm. Die Stege 16, 17 wirken außerdem als Kühlrippen.

In Fig. 8 ist zu erkennen, dass die Bremsscheibe 9 zwei Öffnungen bzw. Belüftungsspalte 18, 19 hat. Das Rad 1 ist durch einen ersten, dem Radreifen 4 nahen Öffnungsspalt 18 und einen zweiten, der Radnabe 5 nahen Öffnungsspalt 19 charakterisiert. Die Öffnungsspalte 18, 19 dienen zur Abführung der Wärmeenergie durch Luftdurchströmung. Beide Öffnungen erlauben eine optimale Luftzirkulation, die durch die vorhandenen Stege 16, 17 und die Rotationsbewegung des Rades unterstützt wird.

Wie Fig. 8 weiterhin veranschaulicht, umfasst die Konstruktion erste Stege 16 und zweite Stege 17, und zwar erste, zwischen Radnabe 5 und Radreifen 4 sich erstreckende erste Radstege 16 und zweite, kürzere Radstege 17, die zum Beispiel etwa nur halb so lang sind. Die kürzeren Radstege 17 sind an einem inneren Rand des Radreifens 4 angeformt.

Zweckmäßigerweise sind die Bremsscheibe 9 und zugehörige Befestigungsmittel zur Befestigung am Rad 1 so dimensioniert, dass eine durch eine Temperaturerhöhung beim Bremsen bedingte Dehnung berücksichtigt wird. Diese Dehnung sorgt dafür, dass in der Bremsscheibe 9 und der Verbindung zum Radkörper 3 Spannungen entstehen. Zulässige Grenzen für die jeweiligen Materialien dürfen nicht überschritten werden.

Die Erfindung ist nicht auf die vorgenannten Beispiele beschränkt, so können anstelle der gezeigten Hohlkammerkonstruktionen auch andere Konstruktionen mit einer anderen Steganordnung eingesetzt werden. So müssen die Stege nicht zwangsläufig einstückig mit einem Scheibenteil angeformt sein. Auch zusätzliche Dämpfungsmittel und/oder Schalldämpfungsschichten zur Schallreduktion können eingesetzt werden.

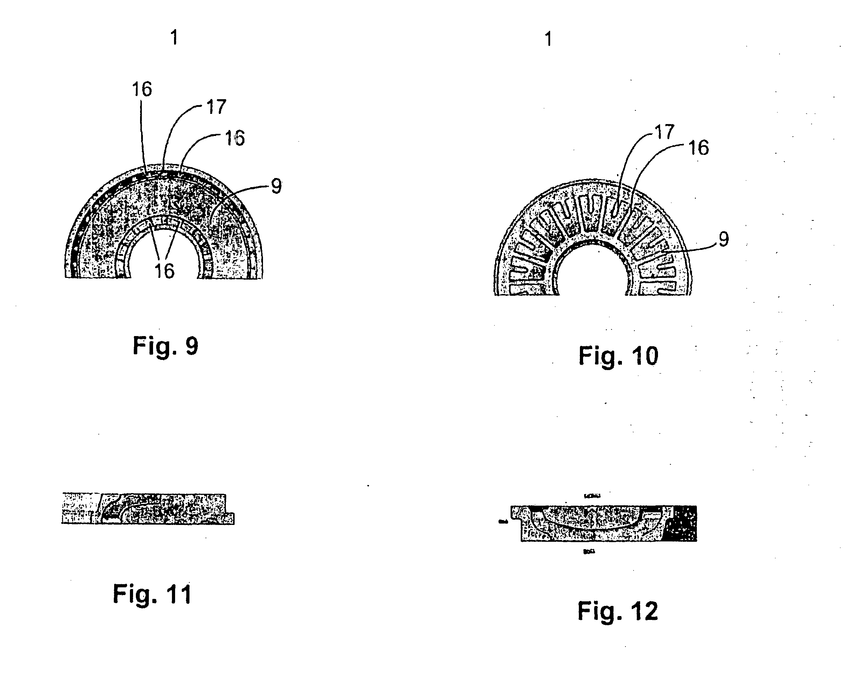

Die Figuren 9 bis 12 zeigen die bevorzugte Ausführungsform der Steganordnung gemäß den Figuren 7 und 8.

### Bezugszeichenliste

- 1: Schienenrad
- 2: Welle
- 3: Radkörper
- 4: Radreifen oder -kranz
- 5: Radnabe
- 6: Medium
- 7: Abstützelement
- 8: Verbindungselement, Verspannelement / Scheibenelement
- 9: Bremsscheibe
- 10, 11: Bremselemente
- 12: Spurkranz
- 13: Innerer Rand
- 14: Hohlraum
- 15: Radsteg
- 16, 17: Rippen
- 18, 19: Öffnungsspalte
- 20: Dämpfungselement, Elastomer(element)
- 21: Schraubverbindung
- 22: Elastomerring
- 23: Spannring

## Patentansprüche

1. Rad (1), insbesondere Schienenrad für Schienenfahrzeuge, mit einem Radkörper (3), der eine Radnabe (5) und einen Radkranz oder -reifen (4) und einen Radsteg (15) umfasst und mit wenigstens einem 3-dimensionalen Verbindungselement (8,9), wobei das Verbindungselement (8) zusammen mit dem Radkörper (3) eine steife offene oder geschlossene Struktur bildet, wobei das Verbindungselement ein stoffschlüssig mit Radnabe (5) und Radkranz oder-reifen (4) verbundene Radsteg (15) ist und wobei mindestens ein parallel oder schräg und zum Radsteg (15) beabstandetes scheibenförmiges Element (8, 9) zusätzlich kraft-, form- und/oder stoffschlüssig mit Radnabe (5) und Radkranz oder -reifen (4) verbunden ist, wobei sich das Scheibenelement (8) zusätzlich zu den äußeren Verbindungen zum Radkranz oder -reifen (4) und Radnabe (5) an mindestens einer Stelle auf dem Radsteg (15) kraft-, form- oder stoffschlüssig, insbesondere über mindestens ein zusätzliches Abstützelement (7), abstützt, und wobei mindestens ein Verbindungselement als Bremsscheibe (9) zwischen der Radnabe (5) des Rades (1) und einem innerem Rand (13) des Radreifens (4) angeordnet ist, **dadurch gekennzeichnet, dass** das oder die Verbindungselement(e) (8, 9) aus einer oder mehreren speziell geformten Bremsscheibe(n) (9) bestehen, die kraft-, form- oder stoffschlüssig mit Radnabe (5) und Radkranz oder -reifen (4) verbunden sind, wobei deren Materialauswahl, Gestaltung und Verbindungsverfahren mit den Berührflächen des Rades oder der Radkomponenten derart gestaltet und dimensioniert sind, dass die akustisch relevanten Radeigenfrequenzen in Bereiche außerhalb eines Erregerfrequenzbereichs, der typischerweise zwischen 100 Hz und 5 kHz liegt, verschoben oder hörbar gedämpft werden.

2. Rad nach einem der vorhergehenden Ansprüche, **dadurch gekennzeichnet, dass** das oder die Verbindungselement(e) (8, 9) asymmetrisch zur Messkreisebene des Rades (1) angeordnet ist (sind).

3. Rad nach einem der vorhergehenden Ansprüche, **dadurch gekennzeichnet, dass** der Radsteg (15) und/oder mindestens ein Verbindungselement (8, 9) eine wellige und/oder verrippte Struktur (16, 17) aufweist.

4. Rad nach einem der vorhergehenden Ansprüche, **gekennzeichnet durch** einen ersten, dem Radreifen (4) nahen Öffnungsspalt (18) und einen zweiten, der Radnabe (5) nahen Öffnungsspalt (19) in den Verbindungselementen, wobei die Öffnungsspalte (18, 19) zur Abführung einer Bremsenergie **durch** Luftdurchströmung vorgesehen sind.

5. Rad nach einem der vorhergehenden Ansprüche, **gekennzeichnet durch** erste, sich im Bereich zwischen Radnabe (5) und Radreifen (4) erstreckende Rippen (16) und zweite, kürzere Rippen (17).

6. Rad nach einem der vorhergehenden Ansprüche, **dadurch gekennzeichnet, dass** jedes Verbindungselement am äußeren und inneren Rand jeweils einen Ring(10) aufweist und die kürzeren Rippen (17) an dem inneren Rand (13) des dem Radkranz oder -reifen (4) zugewandten Rings des Verbindungselements (8, 9) angeformt sind.

7. Rad nach einem der vorhergehenden Ansprüche, **gekennzeichnet durch** mindestens einen Spurkranz (12).

## Claims

1. A wheel (1), in particular a rail wheel for rail vehicles, with a wheel body (3), which comprises a wheel hub (5) and a wheel rim or hoop (4) and a wheel web (15) and with at least one 3-dimensional connecting element (8, 9), wherein the connecting element (8) together with the wheel body (3) forms a stiff open or closed structure, wherein
the connecting element is a wheel web (15) which is connected to wheel hub (5) and wheel rim or hoop (4) in a materially joined manner and wherein
at least one element (8, 9) which is spaced parallel or obliquely with respect to the wheel web (15) is additionally connected to wheel hub (5) and wheel rim or hoop (4) in a non-positively, positively and/or materially joined manner, wherein the disc element (8) in addition to the outer connections supports itself to the wheel rim or wheel hoop (4) and wheel hub (5) at least at one point on the wheel web (15) in a non-positively, positively or materially joined manner, in particular via at least one additional support element (7), and wherein at least one connecting element as brake disc (9) is arranged between the wheel hub (5) of the wheel (1) and an inner edge (13) of the wheel hoop (4), **characterized in that** the connecting element or connecting elements (8, 9) consist of one or multiple specially formed brake disc(s) (9), which are connected to wheel hub (5) and wheel rim or hoop (4) in a non-positively, positively or materially joined manner, wherein their material selection, configuration and connecting method with the contact surfaces of the wheel or the wheel components are configured and dimensioned in such a manner that the acoustically relevant wheel natural frequencies are shifted into ranges outside an exciter frequency range, which typically lies between 100 Hz and 5 kHz, or audibly dampened.

2. The wheel according to any one of the preceding claims, **characterized in that** the connecting element or connecting elements (8, 9) are arranged asymmetrically to the measuring circle plane of the wheel (1).

3. The wheel according to any one of the preceding claims, **characterized in that** the wheel web (15) and/or at least one connecting element (8, 9) have a wavy and/or ribbed structure (16, 17).

4. The wheel according to any one of the preceding claims, **characterized by** a first opening gap (18) which is close to the wheel hoop (4) and a second opening gap (19) which is close to the wheel hub (5) in the connecting elements, wherein the opening gaps (18, 19) are provided for discharging braking energy by air flowing through them.

5. The wheel according to any one of the preceding claims, **characterized by** first ribs (16) extending in the region between wheel hub (5) and wheel hoop (4) and second, shorter ribs (17).

6. The wheel according to any one of the preceding claims, **characterized in that** each connecting element on the outer and inner edge comprises a ring (10) each and the shorter ribs (17) are moulded onto the inner edge (13) of the ring of the connecting element (8, 9) facing the wheel rim or hoop (4).

7. The wheel according to any one of the preceding claims, **characterized by** at least one wheel flange (12).

## Revendications

1. Roue (1), en particulier roue pour véhicules sur rail, comportant un corps (3) qui comprend un moyeu (5) et une jante ou un pneu (4) et une traverse (15) et au moins un élément de raccordement tridimensionnel (8, 9), l'élément de raccordement (8) constituant avec le corps (3) une structure ouverte ou fermée,
l'élément de raccordement étant une traverse (15) raccordée en correspondance matérielle au moyeu (5) et à la jante ou au pneu (4),
au moins un élément en forme de disque (8, 9) écarté parallèlement ou obliquement de la traverse (15) étant raccordé en plus en correspondance mécanique, géométrique et/ou matérielle au moyeu (5) et à la jante ou au pneu (4),
l'élément en forme de disque (8) s'appuyant, en complément aux raccordements extérieurs, en correspondance mécanique, géométrique et/ou matérielle au moyeu (5) et à la jante ou au pneu (4) à au moins un endroit sur la traverse (15), en particulier par au moins un élément d'appui supplémentaire (7) et au moins un élément de raccordement servant de disque de frein (9) étant disposé entre le moyeu (5) de la roue (1) et un bord intérieur (13) du pneu (4), **caractérisée en ce que** le ou les éléments de raccordement (8, 9) consistent en un ou plusieurs disques de frein (9) à conformation spécifique qui sont raccordés en correspondance mécanique, géométrique et/ou matérielle au moyeu (5) et à la jante ou au pneu (4), leur sélection de matériau, configuration et procédé de raccordement aux surfaces de contact de la roue ou des composants de la roue étant conçus et dimensionnés de manière à ce que les fréquences propres de la roue impliquées au niveau acoustique soit décalées ou atténuées de manière audible dans les plages extérieures à une plage de fréquence d'excitation qui se situe habituellement entre 100 Hz et 5 kHz.

2. Roue selon une des revendications précédentes, **caractérisée en ce que** l'élément ou les éléments de raccordement (8, 9) est ou sont disposés asymétriquement par rapport au plan du circuit de mesure de la roue (1).

3. Roue selon une des revendications précédentes, **caractérisée en ce que** la traverse (15) et/ou au moins un élément de raccordement (8, 9) présente une structure ondulée et/ou nervurée (16, 17).

4. Roue selon une des revendications précédentes, **caractérisée par** une première fente d'ouverture (18) proche du pneu (4) et une seconde fente d'ouverture (19) proche du moyeu (5) dans les éléments de raccordement, les fentes d'ouverture (18, 19) étant destinées à évacuer une énergie de freinage par circulation d'air.

5. Roue selon une des revendications précédentes, **caractérisée par** de premières nervures (16) s'étendant dans la zone située entre le moyeu (5) et le pneu (4) et de secondes nervures plus courtes (17).

6. Roue selon une des revendications précédentes, **caractérisée en ce que** chaque élément de raccordement présente respectivement un anneau (10) sur son bord externe et interne et que les nervures plus courtes (17) sont formées sur le bord interne (13) de l'anneau tourné vers la jante ou le pneu (4) de l'élément de raccordement (8, 9).

7. Roue selon une des revendications précédentes, **caractérisée par** au moins un boudin (12).
